# EUROPEAN PATENT APPLICATION

(11) **EP 4 717 334 A1**
(43) Date of publication of application: **01.04.2026**
(21) Application number: 24810455.6
(22) Date of filing: 23.05.2024
(51) Int. Cl.: A63F 1/02, A63F 1/04, A63H 33/08

(54) **ASSEMBLED TOY**

(30) Priority: 23.05.2023 CN 202310588757
(71) Applicant: Shanghai Bloks Technology Group Co., Ltd., Shanghai 201822 (CN); Shanghai Bloks Technology Co., Ltd, Shanghai 201103 (CN)
(72) Inventor: ZHOU, Siyuan, Shanghai 201103 (CN); FAN, Jinwei, Shanghai 201103 (CN)
(74) Representative: Bayramoglu et al.
(86) International application number: PCT/CN2024/094924
(87) International publication number: WO 2024/240218

(57) **Abstract**

The present disclosure provides an assembled card toy, including a card base (8), and first card content pieces (1) and second card content pieces (2) assembled in a protruding manner on a front side of the card base (8), where a display surface (7) located on an unshielded front side of any one or more of the card base (8), the first card content pieces (1) and the second card content pieces (2) and excluding detachable interfaces forms part or all of a card face. In the present disclosure, the card face is formed by assembling the physical card content pieces, thereby reducing the number of card bases. Furthermore, the present disclosure enables separate anti-counterfeiting identification for different parts of a complete card, and expands the display dimension of card face information.

## Description

### TECHNICAL FIELD

The present disclosure relates to a game card, and in particular to an assembled card toy.

### BACKGROUND TECHNOLOGY

Game cards in the prior art are two-dimensional, planar structures, and exist as indivisible whole units, that is, a card serves a whole. Consequently, the face of each individual card is fixed and unalterable. For example, the face of each poker card is limited to a fixed suit, number, and letter, while the face of each battle card is limited to a fixed character image, combat power value, special skill, and card rarity level, etc.

### CONTENT OF THE INVENTION

In view of the defects in the prior art, an objective of the present disclosure is to provide an assembled card toy.

The assembled card toy provided by the present disclosure includes a card base 8, and first card content pieces 1 and second card content pieces 2 assembled in a protruding manner on a front side of the card base 8, where
the first card content pieces 1 are assembled on the card base 8 through first assembly interfaces 901, and the first assembly interfaces 901 are shielded by the assembled first card content pieces 1;
the second card content pieces 2 are assembled on the first card content pieces 1 through second assembly interfaces 902, and the second assembly interfaces 902 are shielded by the assembled second card content pieces 2;
the first assembly interfaces 901 and the second assembly interfaces 902 are incompatible detachable interfaces; and
a display surface 7 located on an unshielded front side of any one or more of the card base 8, the first card content pieces 1 and the second card content pieces 2 and excluding the detachable interfaces forms part or all of a card face.

Preferably, a set of card faces includes a plurality of subsets of card faces, and an element of the set of card faces is the display surface 7;
the first assembly interfaces 901 corresponding to the first card content pieces 1 with respective display surfaces 7 belonging to a same subset of card faces are mutually interchangeable; and
the second assembly interfaces 902 corresponding to the second card content pieces 2 with respective display surfaces 7 belonging to a same subset of card faces are mutually interchangeable.

Preferably, the first assembly interfaces 901 corresponding to the first card content pieces 1 with respective display surfaces 7 belonging to different subsets of card faces are not mutually interchangeable; and
the second assembly interfaces 902 corresponding to the second card content pieces 2 with respective display surfaces 7 belonging to different subsets of card faces are not mutually interchangeable.

Preferably, the first card content pieces 1 and/or the second card content pieces 2 are connected to a movable card content piece 3 through a joint structure 6; and
the movable card content piece 3 is configured to, via the joint structure 6, move among a plurality of relative positions with respect to the card base 8 and remain stationary at any one of the plurality of relative positions with respect to the card base 8.

Preferably, any two or more of the card base 8, the first card content pieces 1, the second card content pieces 2 and the movable card content piece 3 are provided with electronic tags.

Preferably, the electronic tags are electronic anti-counterfeiting tags.

Preferably, an assembly direction of the first card content pieces 1 and the second card content pieces 2 is identical to a thickness direction of the card base 8.

Preferably, all back sides of the second card content pieces 2 are in contact with the first card content pieces 1, or all back sides of the second card content pieces 2 are in contact with the first card content pieces 1 and the card base 8 together.

Preferably, at least three most protruding parts on the front side of the card base 8 define a plane; and
the plane is parallel to the front side and/or a back side of the card base 8.

Preferably, the three parts are respectively located at a head, a left foot and a right foot of the card face, or are respectively located at the head, a left hand and a right hand of the card face.

Compared with the prior art, the present disclosure has the following beneficial effects:
1. The card face in the present disclosure is formed by assembling the physical card content pieces, which reduces the number of the card bases.
2. The present disclosure enables separate anti-counterfeiting identification for different parts of a complete card.
3. The present disclosure expands the display dimension of card face information.

### DESCRIPTION OF THE DRAWINGS

Other features, objectives, and advantages of the present disclosure will become more apparent by reading the detailed description of non-limiting embodiments with reference to the following drawings.
FIG. 1 is a schematic view of an assembled card according to an embodiment of the present disclosure;
FIG. 2 is an exploded view of the assembled card shown in FIG. 1;
FIG. 3 is a schematic view of an assembled card according to another embodiment of the present disclosure;
FIG. 4 is an exploded view of the assembled card shown in FIG. 3;
FIG. 5 is a schematic view of a humanoid robot with a weapon accessory replaced to change a card face; and
FIG. 6 is a schematic view of interfaces for cards of different camps.

### Reference Numerals:

| | | |
|---|---|---|
| 3. movable card content piece | 6. joint structure | 7. display surface |
| 2. second card content piece | 902. second assembly interface | 801. front side |
| 1. first card content piece | 901. first assembly interface | 802. back side |
| 8. card base | | |

### SPECIFIC IMPLEMENTATIONS

The present disclosure is described in detail below with reference to the specific embodiments. The following embodiments will help those skilled in the art to further understand the present disclosure, without limiting the present disclosure in any way. It should be noted that several variations and improvements can also be made by a person of ordinary skill in the art without departing from the conception of the present disclosure. These all fall within the protection scope of the present disclosure.

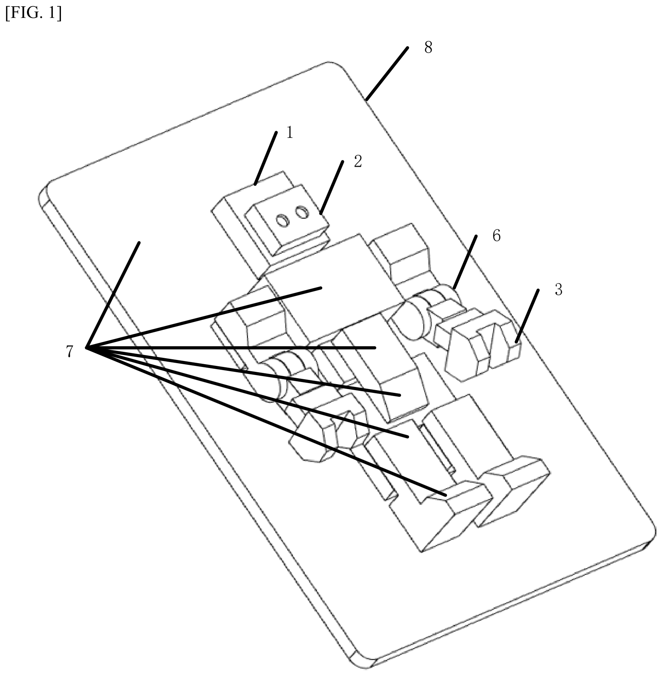

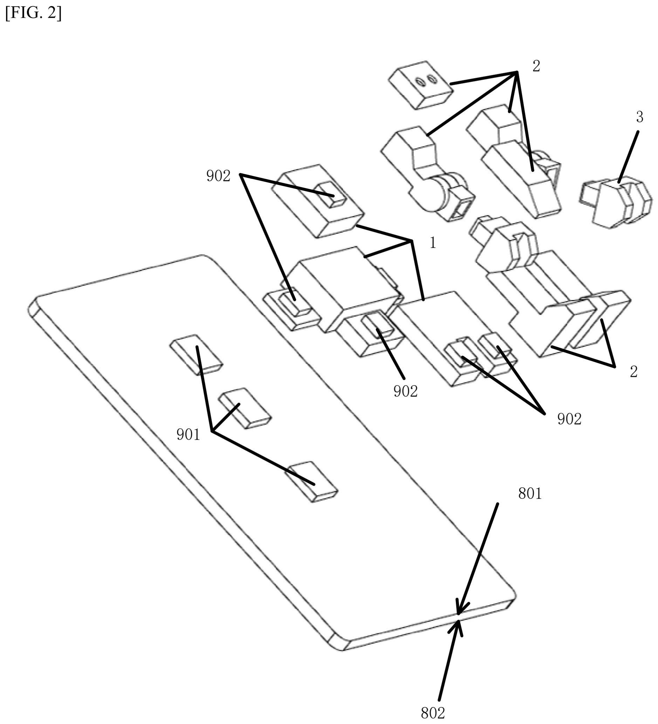

As shown in FIG. 1 and FIG. 2, an assembled card toy provided by the present disclosure includes a three-dimensional card face with a robot as card content. It includes card base 8, and first card content pieces 1 and second card content pieces 2 assembled in a protruding manner on a front side of the card base 8. FIG. 2 specifically shows three first card content pieces 1 respectively located at a head, an upper body, and a lower body of a humanoid robot, six second card content pieces 2 respectively located at one face, two arms, one crotch, and two legs, and two hands connected via joint structure 6. The card base 8 has a thickness, with two sides in a thickness direction: a visible side serving as the front side shown in the figure and an invisible side serving as a back side. The first card content pieces 1 and the second card content pieces 2 are subjected to the restriction that first assembly interfaces 901 and second assembly interfaces 902 are incompatible detachable interfaces. Thus, the assembly must follow the sequence of first assembling the first card content pieces 1 and then the second card content pieces 2. This forms a structure where the card base 8, the first card content piece 1 and the second card content piece 2 are connected in sequence in each group. The first assembly interfaces 901 and the second assembly interfaces 902 may be detachable interfaces incompatible in shape, such as circular male-female connectors with different radii or male-female connectors with different cross-sectional shapes. Since the first assembly interfaces 901 and the second assembly interfaces 902 are detachable interfaces, a user can manually assemble a complete card without tools, or remove one card content piece from the card and replace it with another.

The first card content pieces 1 are assembled on the card base 8 through the first assembly interfaces 901, and the first assembly interfaces 901 are shielded by the assembled first card content pieces 1. FIG. 2 shows parts of three first assembly interfaces 901, which are male-female connectors in the embodiment shown in FIG. 2, with male parts shown in FIG. 2. As shown in FIG. 1, the three first assembly interfaces 901 are shielded and invisible to the user, so they do not appear on the card face.

The second card content pieces 2 are assembled on the first card content pieces 1 through the second assembly interfaces 902, and the second assembly interfaces 902 are shielded by the assembled second card content piece 2. FIG. 2 shows parts of six second assembly interfaces 902, which are male-female connectors in the embodiment shown in FIG. 2, with male parts shown in FIG. 2. As shown in FIG. 1, the six second assembly interfaces 902 are shielded and invisible to the user, so they do not appear on the card face.

Display surface 7 located on an unshielded front side of any one or more of the card base 8, the first card content pieces 1 and the second card content pieces 2 and excluding the detachable interfaces forms part or all of the card face. As shown in FIG. 1, a surrounding area of the card base 8 forms the display surface 7 of the card base 8. A front area of the head as one first card content piece 1 and not shielded by the face as one second card content piece 2 forms the display surface 7 of the head. Front sides of feet as two second card content pieces 2 are exposed as the display surfaces 7 of the feet. Each display surface 7 forms part of the card face through its visual attributes such as shape, pattern, and color, and all display surfaces 7 together form the entire card face through their visual attributes. Preferably, the front side includes a surface visible to the user from a front-view perspective.

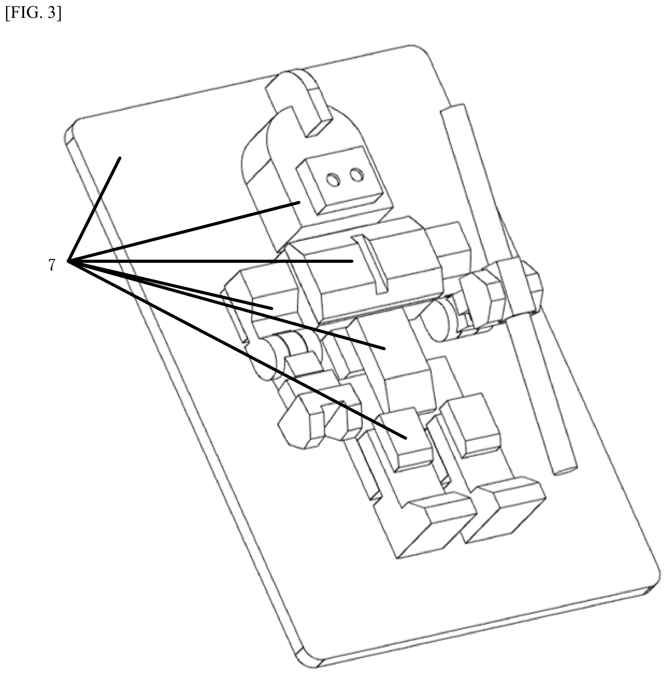

Furthermore, to change the card face, the second card content piece 2 or the first card content piece 1 is replaced or omitted. As shown in FIG. 1 and FIG. 3, the first card content pieces 1 of the two cards are the same and not replaced, while the second card content pieces 2 are replaced, resulting in different card faces. For example, the humanoid robot in FIG. 3 is additionally provided with a helmet, chest armor, and knee pads compared to that shown in FIG. 1, so the defense value of the card face shown in FIG. 3 is higher than that shown in FIG. 1. The card face further includes rarity, which is distinguished by the color of the display surface 7. For example, gold represents epic equipment, purple represents elite equipment, and orange represents rare equipment. The card face further includes a value bonus. For example, display surface 7 with a flame pattern indicates an attack value with an additional fire attack bonus.

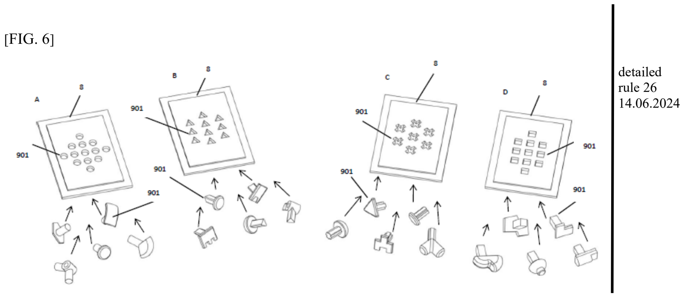

Furthermore, game cards are governed by game rules, and the observable elements of the card face limit the arbitrariness of the card face to prevent the user from making mistakes that violate the game rules. For example, tarot cards cannot be mixed with poker cards to keep the card faces in line with poker game rules. The present disclosure restricts the user's operations through physical structures. For example, cards can be divided into different camps, and card content pieces of different camps are not allowed to be assembled on the same card base 8. The present disclosure structurally solidifies the camp distinction through the interchangeability or non-interchangeability of interfaces. On one hand, it allows card content pieces to be combined to form richer card faces, greatly reducing the number of card bases 8 needed. On the other hand, it prevents incorrect assembly of card content pieces from different card face camps. Specifically, a set of card faces includes a plurality of subsets of card faces, where the elements of the set of card faces are the display surfaces 7. For example, as shown in FIG. 6, the subsets of card faces can include those corresponding to four camps: A, B, C, and D.

The first assembly interfaces 901 corresponding to the first card content pieces 1 with respective display surfaces 7 belonging to the same subset of card faces are mutually interchangeable. For example, the cross-sections of the first assembly interfaces 901 in camp A are circles with the same radius. The second assembly interfaces 902 corresponding to the second card content pieces 2 with respective display surfaces 7 belonging to the same subset of card faces are mutually interchangeable. In contrast, the first assembly interfaces 901 corresponding to the first card content pieces 1 with respective display surfaces 7 belonging to different subsets of card faces are not mutually interchangeable. For example, the cross-sections of the first assembly interfaces 901 in the camp A are circles, while the cross-sections of the first assembly interfaces 901 in camp B are triangles. The second assembly interfaces 902 corresponding to the second card content pieces 2 with respective display surfaces 7 belonging to different subsets of card faces are not mutually interchangeable.

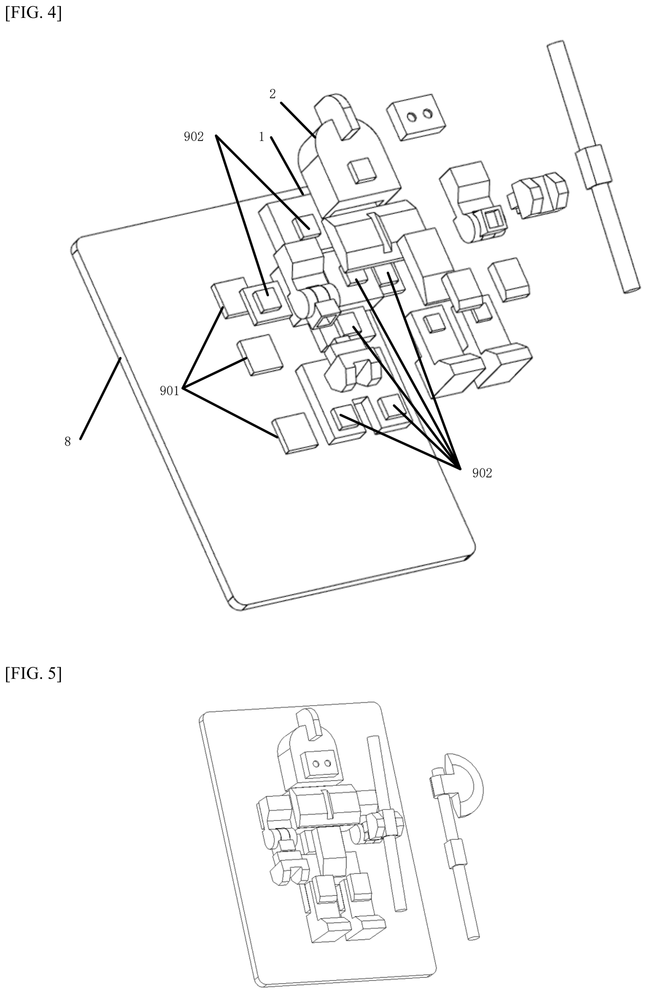

Furthermore, in FIG. 1 and FIG. 3, the raising positions of the left and right hands of the humanoid robot are different. In the present disclosure, the first card content piece 1 and/or the second card content piece 2 are connected to movable card content piece 3 through the joint structure 6. In a preferred example, the second card content piece 2 is provided with the joint structure 6. In another preferred example, the second assembly interface 902 is a joint structure, and the movable card content piece 3 can be one second card content piece 2. As shown in FIG. 2 and FIG. 4, the movable card content piece 3 can be connected to the joint structure 6 through a detachable plug-in structure or can be fixedly connected to the joint structure 6. The movable card content piece 3 is configured to, via the joint structure 6, move among a plurality of relative positions with respect to the card base 8 and remain stationary at any one of the plurality of relative positions with respect to the card base 8. This makes the card face movable. For example, both hands raised indicate a defensive card face, and only one hand raised indicates an offensive card face. In addition, the card content pieces can include accessories such as weapon pieces, as shown in FIG. 4 and FIG. 5.

More specifically, the assembly direction of the first card content piece 1 and the second card content piece 2 is identical to the thickness direction of the card base 8. For example, both are the normal direction of the card base 8. Thus, after the card base 8 is placed flat on the game card table, the user can easily assemble the card content pieces with one hand by pressing downward. Moreover, when the card is placed vertically, the card content pieces and other accessories are not easy to fall off. All back sides of the second card content pieces 2 are in contact with the first card content pieces 1, or all back sides of the second card content pieces 2 are in contact with the first card content pieces 1 and the card base 8 together, making the assembly of the card content pieces more stable.

Cards are stacked during storage, and may need to be flipped over and placed on the table during game playing. In the present disclosure, at least three most protruding parts on the front side of the card base 8 define a plane. The plane is parallel to the front side and/or the back side of the card base 8. The three parts are respectively located at the head, the left foot and the right foot of the card face, or at the head, the left hand and the right hand of the card face. This allows the cards to be placed stably and uniformly when stacked or flipped over on the table.

In more preferred examples, any two or more of the card base 8, the first card content piece 1, the second card content piece 2 and the movable card content piece 3 are provided with electronic tags. The electronic tags are electronic anti-counterfeiting tags. Thus, counterfeit products imitating the shell shape, pattern, and color of the card content pieces can still be distinguished by reading their electronic anti-counterfeiting tags. This further realizes separate anti-counterfeiting identification for the card base 8 and each of the first card content pieces 1 and the second card content pieces 2 in the complete card.

In the description of the present disclosure, it needs to be understood that the orientation or positional relationships indicated by terms, such as "up", "down", "front", "rear", "left", "right", "vertical", "horizontal", "top", "bottom", "inside", and "outside", are based on the orientation or positional relationship shown in the accompanying drawings, are merely for facilitating the description of the present disclosure and simplifying the description, rather than indicating or implying that an apparatus or element referred to must have a particular orientation or be constructed and operated in a particular orientation, and therefore shall not be interpreted as limiting the present disclosure.

The specific embodiments of the present disclosure are described above. It should be understood that the present disclosure is not limited to the above specific implementations, and a person skilled in the art can make various variations or modifications within the scope of the claims without affecting the essence of the present disclosure. The embodiments of the present disclosure and features in the embodiments may be arbitrarily combined with each other in a non-conflicting situation.

## Claims

1. An assembled card toy, **characterized by** comprising: a card base (8), and first card content pieces (1) and second card content pieces (2) assembled in a protruding manner on a front side of the card base (8), wherein
the first card content pieces (1) are assembled on the card base (8) through first assembly interfaces (901), and the first assembly interfaces (901) are shielded by the assembled first card content pieces (1);
the second card content pieces (2) are assembled on the first card content pieces (1) through second assembly interfaces (902), and the second assembly interfaces (902) are shielded by the assembled second card content pieces (2);
the first assembly interfaces (901) and the second assembly interfaces (902) are incompatible detachable interfaces; and
a display surface (7) located on an unshielded front side of any one or more of the card base (8), the first card content pieces (1) and the second card content pieces (2) and excluding the detachable interfaces forms part or all of a card face.

2. The assembled card toy according to claim 1, **characterized in that** a set of card faces comprises a plurality of subsets of card faces, and an element of the set of card faces is the display surface (7);
the first assembly interfaces (901) corresponding to the first card content pieces (1) with respective display surfaces (7) belonging to a same subset of card faces are mutually interchangeable; and
the second assembly interfaces (902) corresponding to the second card content pieces (2) with respective display surfaces (7) belonging to a same subset of card faces are mutually interchangeable.

3. The assembled card toy according to claim 2, **characterized in that** the first assembly interfaces (901) corresponding to the first card content pieces (1) with respective display surfaces (7) belonging to different subsets of card faces are not mutually interchangeable; and
the second assembly interfaces (902) corresponding to the second card content pieces (2) with respective display surfaces (7) belonging to different subsets of card faces are not mutually interchangeable.

4. The assembled card toy according to claim 1, **characterized in that** the first card content pieces (1) and/or the second card content pieces (2) are connected to a movable card content piece (3) through a joint structure (6); and
the movable card content piece (3) is configured to, via the joint structure (6), move among a plurality of relative positions with respect to the card base (8) and remain stationary at any one of the plurality of relative positions with respect to the card base (8).

5. The assembled card toy according to claim 4, **characterized in that** any two or more of the card base (8), the first card content pieces (1), the second card content pieces (2) and the movable card content piece (3) are provided with electronic tags.

6. The assembled card toy according to claim 6, **characterized in that** the electronic tags are electronic anti-counterfeiting tags.

7. The assembled card toy according to claim 1, **characterized in that** an assembly direction of the first card content pieces (1) and the second card content pieces (2) is identical to a thickness direction of the card base (8).

8. The assembled card toy according to claim 1, **characterized in that** all back sides of the second card content pieces (2) are in contact with the first card content pieces (1), or all back sides of the second card content pieces (2) are in contact with the first card content pieces (1) and the card base (8) together.

9. The assembled card toy according to claim 1, **characterized in that** at least three most protruding parts on the front side of the card base (8) define a plane; and
the plane is parallel to the front side and/or a back side of the card base (8).

10. The assembled card toy according to claim 1, **characterized in that** the three parts are respectively located at a head, a left foot and a right foot of the card face, or are respectively located at the head, a left hand and a right hand of the card face.
